Europäisches Patentamt

European Patent Office

Office européen des brevets

(19)

(11) Publication number: **0 038 397**
**A1**

# EUROPEAN PATENT APPLICATION

(12)

(21) Application number: **80850051.6**

(22) Date of filing: **10.04.80**

(51) Int. Cl.³: **F 24 J 3/02**

(43) Date of publication of application:
**28.10.81 Bulletin 81/43**

(84) Designated Contracting States:
**AT BE DE FR GB IT LU NL SE**

(71) Applicant: **A/S MOELVEN BRUG**

**N-2390 Moelv(NO)**

(72) Inventor: **Proven, Johan**
**Havreveien 19**
**N-2390 Moelv(NO)**

(74) Representative: **Delmar, John-Ake**
**Östermalmsgatan 45**
**S-114 26 Stockholm(SE)**

(54) **Solar panel.**

(57) A solar panel, comprising a closed body (1) of thermal insulation material with a transparent surface on at least one side thereof, the body (1) having one or more lowered sections (3) which are lower than the side edges (4) and optional support members, and is surrounded by a transparent sleeve (2) such that one or more air spaces (5) are formed between said sleeve (2) and said lowered sections (3), the body (1) and the sleeve (2) together constituting an element which is adapted to be installed between structural members in a building or itself constituting an independent wall/roof member.

Fig. 1

EP 0 038 397 A1

Croydon Printing Company Ltd.

The present invention pertains to solar panels which are used to collect solar energy, which is transferred to a storage means or an accumulator from which energy for consumption, for example, for heating, can later be drawn as needed.

The previously known solar panels have been built up of a number of different materials in order to obtain a satisfactory functioning of the device. Such solar panels might comprise a frame or a cassette, usually of aluminum, lined with a thermal insulation material; an absorber surface, usually of metal, from which the heat energy is transferred to a heat-carrying medium which can be a liquid or air; and one or more transparent materials which form the exterior of the frame or cassette; then with the aid of sealing materials and clamp-fit moldings, one seals the panel against the outside climate. A suitable number of such solar panels are usually attached to a roof structure, a sloping wall or the like, positioned such that rays from the sun strike at the most profitable angle of incidence.

A substantial disadvantage with the previously known solar panels is that they are of a complicated construction and are therefore expensive to produce, such that the panels constitute a very substantial proportion of the costs of a solar heating system, for example, for a home.

The object of the present invention, therefore, is to arrive at a solar panel which is far simpler and less expensive to produce, but without adversely affecting the functioning of the panel.

In accordance with the invention, this object is obtained in that the solar panel comprises a hollow space sandwiched between a transparent surface and a layer of insulating material, which can well be the same type of insulating material as one in any case would have to use as thermal insulation in the roof or wall in which the solar panel is installed.

The invention is characterized by the features recited in the appurtenent patent claims, and will be further elucidated in the following with reference to the accompanying drawings, where

Figure 1 shows, in perspective, an embodiment of a solar panel utilizing air as the heat-carrying medium,

Figure 2, also in perspective, shows an embodiment adapted to utilize liquid as the heat-carrying medium,

Figures 3 and 4 show respective end views of two possible embodiments of the solar panel, and

Figure 5 shows an embodiment in which a plurality of support members have been provided.

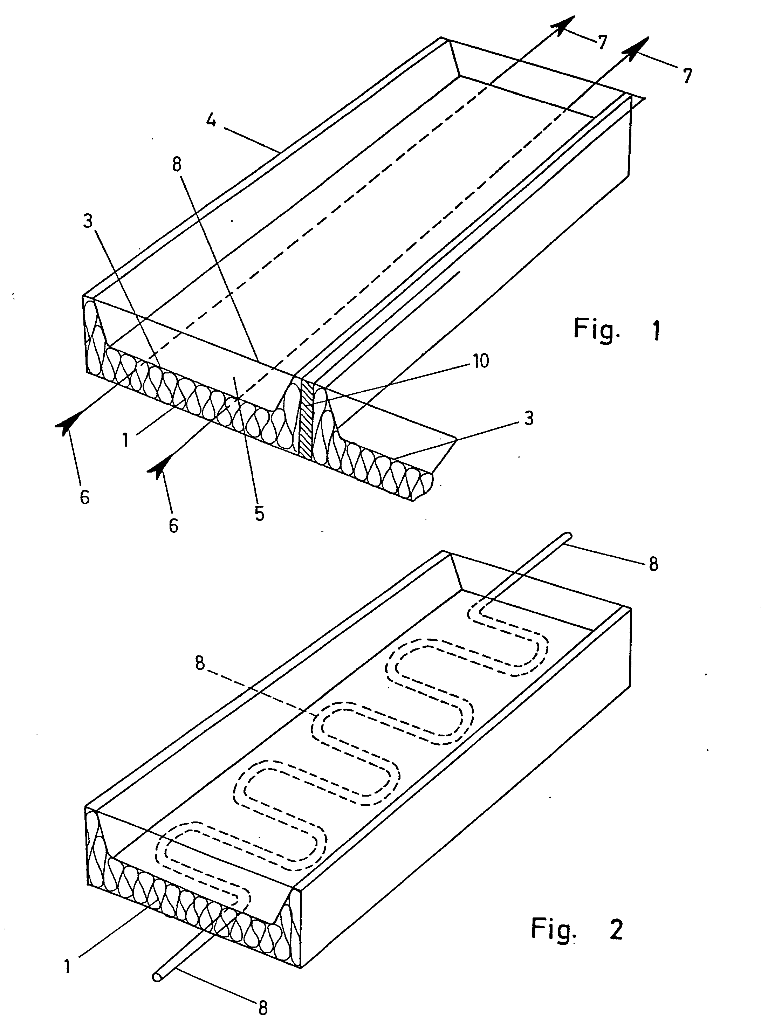

As shown in Figure 1, the solar panel comprises a body 1 of thermal insulation material, optionally partitioned by a mechanical support member and provided with a transparent foil 2 on at least one of the side surfaces thereof. The foil can be of a tubular configuration and thus surround the body of insulation material on all sides. In accordance with the invention, the body 1 has one or more sections 3 which are at a lower level than the side edges 4 and optional support members 10 (partitioning members), and a hollow space 5 is thus formed between the foil 2 and the sections 3; as the sun shines through the foil, the temperature inside the space 5 will increase as the sun's rays heat up the insulation material in the section 3, which in this way forms an absorber. The insulation material used is of a type which permits air to flow through it in the longitudinal direction of the solar panel, as shown by the arrows 6 and 7, where the arrows 6 indicate an inflow of cold air and the arrows 7 the outflow of air which has been heated by its passage over the insulation material in the body 1, which in turn has been heated by the rays of the sun. The foil and insulating body together provide adequate mechanical strength, and such solar panels can be placed between rafters, between beams, or between studs in the wall in the same way as one today installs insulation matting for heat insulation.

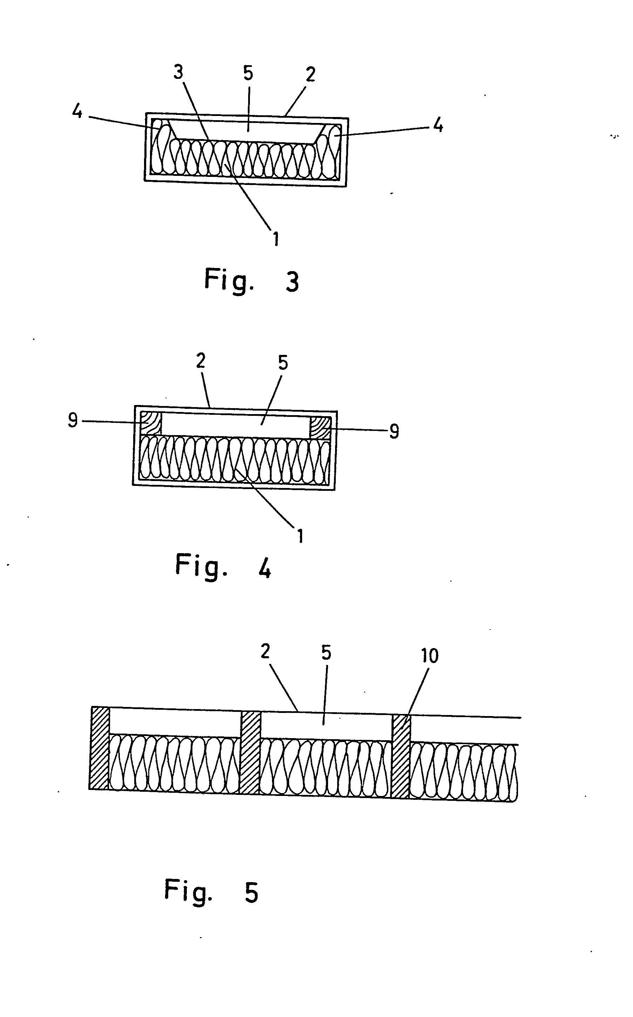

With reference to Figure 5, one may also install structural support members 10 in the elements, such that the elements thus constitute integral, selfsupporting roof/wall members. The exterior covering for the building structure, which provides protection against wind and rain, must then be made of a transparent material. In this way, the solar panels are integrated into the structure per se of the building. In order to increase the efficiency of the body 1 even more, it can be painted black or be coated with a material which has a higher degree of absorption than the insulation material.

When the present invention is used, the costs will, as mentioned, be substantially reduced in that the solar panel will use the insulation which in any case would be used in the building structure. The example illustrated in Figure 1 is adapted to utilize air as the heat-carrying medium, but the solar panels of the invention can also be adapted to solar heating systems utilizing liquid as the heat-carrying medium. An example of this is shown in Figure 2, where a serpentine tube 8 is installed in the solar panel, the bends of the tube being in good heat-transferring contact with the insulating body 1, for example, being placed on one surface of the body or being embedded in the insulation material.

As explained above, the main parts of the solar panel, i.e. the body 1 of insulation material and the surrounding transparent foil, are both inexpensive, easily available building materials which one must in any case utilize, and in the embodiment shown in Figure 3 the insulating body 1 is formed with raised edges 4 as shown on Figure 2, thereby providing an air space 5 between the top surface of the lower section 3 and the foil 2, which in a tubular form surrounds the solar panel. Another solution is to utilize an insulation matting with plane side surfaces as the insulating body 1 (Figure 4). Spacer battens 9 are then laid along the edges on one surface of the insulation to hold the transparent foil 2 a sufficient distance from the surface of the body 1 to provide the air space 5.

The examples illustrated herein serve merely to illustrate the invention and should not be construed as constituting a limitation on the scope of protection provided by this patent, as other embodiments can easily be imagined which would fall within the scope of the invention.

Claims:

1.      A solar panel, comprising a closed body of thermal insulation material with a transparent surface on at least one side thereof, characterized in that the body (1) has one or more lowered sections (3), which are lower than the side edges (4) and optional support members, and is surrounded by a transparent sleeve (2) such that one or more air spaces (5) are formed between said sleeve (2) and said lowered sections (3), the body (1) and the sleeve (2) together constituting an element which is adapted to be installed between structural members in a building or itself constituting an independent wall/roof member.

2.      A solar panel according to claim 1, characterized in that the body (1) and the side edges (4) are of the same material.

3.      A solar panel according to claim 1, characterized in that the side edges (4) of the body (1) are formed by elongated members (9) which rest on the insulation material.

4.      A solar panel according to claim 1, characterized in that the sleeve (2) is a tubular foil, for example, of a suitable plastic material.

5.      A solar panel according to claim 1, characterized in that the insulating body (1) is adapted to permit the through-flow of air as the heat--carrying medium.

6.      A solar panel according to claim 1, characterized in that the insulating body (1) contains, for example, embedded therein, a serpentine tube (8) for the flow of liquid as the heat-carrying medium.

7.      A solar panel according to claim 1, characterized in that structural support members (10) are disposed in the body in the longitudinal direction thereof.

4

8

3

10

1

6

6

5

3

Fig. 1

8

8

1

8

Fig. 2

0038397

Fig.   3

Fig.   4

Fig.   5

## DOCUMENTS CONSIDERED TO BE RELEVANT

| Category | Citation of document with indication, where appropriate, of relevant passages | Relevant to claim |
|---|---|---|
| | DE - A1 - 2 701 805 (GRÄFF)<br>* Page 3, lines 1-13; page 4, lines 7-13; page 5, lines 8-15; page 8, lines 28-31; fig. 1,2 * | 1,2,4,5,6 |
| | DE - A1 - 2 643 746 (PHOENIX GUMMIWERKE AG)<br>* Page 6, lines 24-33; fig.1,3 * | 1,2,6 |
| | US - A - 4 015 582 (THE REGENTS OF THE UNIVERSITY OF MINNESOTA)<br>* Column 2, line 60 - column 3, line 3; column 4, lines 18-25, 48-53 * | 1,2,4,5,6 |
| | AT - B - 347 641 (MAIR HEINRICH)<br>* Totality * | 1,7 |
| | DE - A1 - 2 603 811 (BBC AG BROWN-BOVERI)<br>* Fig. 5 * | 1,3 |
| | CH - A - 257 348 (JANN SUTTER)<br>* Column 1, lines 28-30; fig.1 * | 1,3 |

**CLASSIFICATION OF THE APPLICATION (Int. Cl. 3)**

F 24 J 3/02

**TECHNICAL FIELDS SEARCHED (Int.Cl. 3)**

F 24 J 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| Place of search<br>VIENNA | Date of completion of the search<br>24-10-1980 | Examiner<br>ENDLER | |

EPO Form 1503.1  06.78